(19) Europäisches Patentamt / European Patent Office / Office européen des brevets

(11) **EP 4 753 279 A1**

(12) **EUROPEAN PATENT APPLICATION**

(43) Date of publication:
03.06.2026 Bulletin 2026/23

(21) Application number: 25209062.6

(22) Date of filing: 16.10.2025

(51) International Patent Classification (IPC):
*H04N 23/741* (2023.01)

(52) Cooperative Patent Classification (CPC):
H04N 23/741

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.11.2024 KR 20240171715

(71) Applicant: Korea Advanced Nano Fab Center
Suwon-si, Gyeonggi-do 16229 (KR)

(72) Inventors:
• JUN, Dong Hwan
16863 GYEONGGI-DO (KR)
• KIM, Shin Keun
16902 GYEONGGI-DO (KR)

(74) Representative: Cabinet Beaumont
4, Place Robert Schuman
B.P. 1529
38025 Grenoble Cedex 1 (FR)

(54) **APPARATUS AND METHOD FOR ACQUIRING GHOST-FREE HIGH DYNAMIC RANGE IMAGE**

(57) Proposed are a High Dynamic Range (HDR) image acquisition apparatus and an HDR image acquisition method. The HDR image acquisition apparatus may include at least two image acquisition modules configured such that each of the at least two image acquisition modules includes an image sensor and has a target sensing light intensity range different from each other, the at least two image acquisition modules being configured to simultaneously photograph a target photographing region. Furthermore, the HDR image acquisition apparatus may include an HDR-type image synthesis part configured to generate an HDR image by synthesizing at least two images in an HDR synthesis manner, the at least two images being simultaneously acquired by the at least two image acquisition modules.

FIG. 2

# Description

## CROSS REFERENCE TO RELATED APPLICATION

The present application claims priority to Korean Patent Application No. 10-2024-0171715, filed November 27, 2024, the entire contents of which are incorporated herein for all purposes by this reference.

## BACKGROUND

### Technical Field

The present disclosure relates to an apparatus and method related to image photographing/acquisition. More particularly, the present disclosure relates to a High Dynamic Range (HDR) image acquisition apparatus and an HDR image acquisition method.

This work was supported by the Nano & Material Technology Development Program through the National Research Foundation of Korea(NRF) funded by the Ministry of Science and ICT (2022M3H4A3051764) .

### Description of the Related Art

Generally, a digital image sensor or a camera is capable of performing sensing within a limited illuminance range, and dynamic range refers to a light illuminance range that an image photographed by a sensor or a camera can express. The dynamic range of human vision is known to be about 80 dB, the dynamic range of a Complementary Metal Oxide Semiconductor (CMOS) image sensor is about 54 dB, the range of natural light intensities on Earth spans at least 100 dB, and the range of observable light intensities in the universe extends to at least 180 dB. Therefore, an image photographed by a camera and so on has a lower quality than a real image seen by humans. In an image sensor configured to receive direct sunlight, carrier collection may be impossible as excessive carriers may be generated to the extent of offsetting an internal electric field of the sensor. Conversely, as the number of incident photons is low in a dark place, light detection is difficult to be performed when carriers generated by light are smaller than a dark current.

An image sensor element utilized in the fields of cameras, robotics, autonomous driving, extended reality (XR), augmented reality (AR), three-dimensional (3D) cameras, and so on has a limitation in sensing dynamic range. Therefore, when a light amount differences in a single image frame are too large, there may be difficulties in performing object recognition in bright or dark portions.

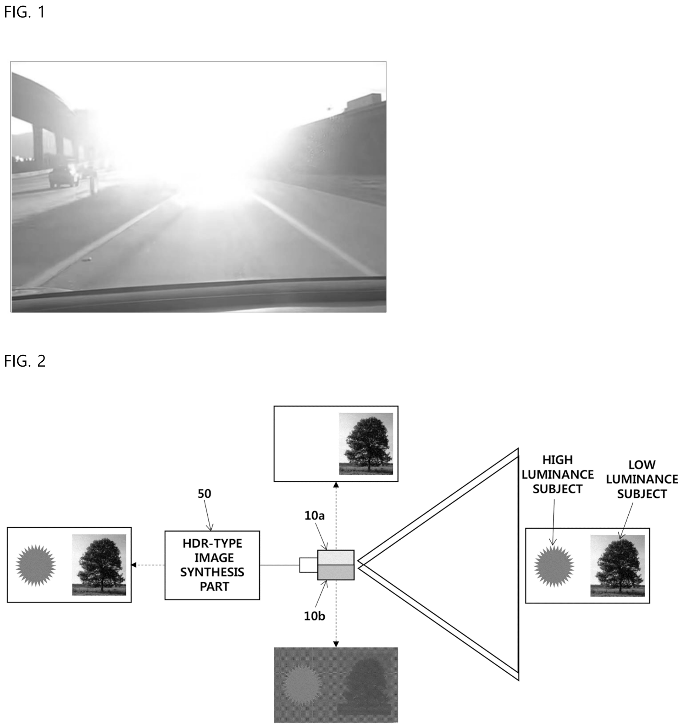

FIG. 1 is a photograph illustrating a problem caused by a limitation in dynamic range of an image sensor. As illustrated in FIG. 1, in a situation in which the dynamic range is low, when there is a subject that is too bright, such as the sun, it may be difficult to identify subjects in a photographed image. For example, when a vehicle is driven in a direction toward the sun during autonomous driving, there may be a problem in that forward subjects such as a preceding vehicle may not be identified due to sunlight.

High Dynamic Range (i.e., HDR) technology is intended to extend the illuminance range capable of being expressed within an image, and aims to provide a more realistic image without sacrificing image and tone in a bright or dark region. HDR is attracting attention as a next-generation high-quality imaging technology. Recently, the demand for HDR technology has increased in line with the demand for a high-quality three-dimensional image or a high-quality three-dimensional moving image.

As a method for realizing HDR, various methods such as improving an element of an image sensor, changing a circuit configuration, or using an algorithm have been researched. As an algorithm correction method for implementing HDR, there are methods such as a Highlight Compensation (HLC) method, a High Dynamic Range Imaging (HDRI) method, a Digital Wide Dynamic Range (DWDR) method, and so on. The HDRI method that is recently researched and developed is a multi-exposure coupling method in which multiple images of the same scene captured at different exposure times are combined. In the HDRI method, there is no problem of a ghost artifact in a still image, but there is a problem of a ghost artifact in a moving image. Since multiple images (bracketed image sequence) at different times with different exposure times are acquired with a single camera and the acquired multiple images are synthesized, a ghost artifact, i.e, a ghost effect, causing a blurred edge of a subject occurs for a moving subject. In addition, since the dynamic range in conventional HDR implementation technology is limited to equal to or less than 100 dB, it is difficult to apply the conventional HDR implementation technology to a moving image or high-definition image, and there is a disadvantage that power consumption is large due to calculation of an optical flow field.

## SUMMARY

Accordingly, the present disclosure has been made keeping in mind the above problems occurring in the related art, and an objective of the present disclosure is to provide an apparatus and method capable of acquiring a High Dynamic Range (HDR) image without a ghost effect such as a ghost artifact.

In addition, another objective of the present disclosure is to provide an apparatus and method capable of realizing an HDR image in real time (or almost real time) for a still image as well as a moving image, the HDR image having a high level of dynamic range.

In addition, yet another objective of the present disclosure is to provide an apparatus and method capable of being usefully applied to the fields of autonomous driving, robotics, extended reality (XR), augmented reality (AR), three-dimensional (3D) cameras, and so on, the apparatus and method being also capable of preventing errors, malfunctions, and so on in a vision system.

The technical problems that are intended to be addressed in the present disclosure are not restricted to the above described problems, and other problems, which are not mentioned herein, could be clearly understood by those of ordinary skill in the art from details described below.

According to an aspect of the present disclosure, there is provided a High Dynamic Range (HDR) image acquisition apparatus including: at least two image acquisition modules configured such that each of the at least two image acquisition modules includes an image sensor and has a target sensing light intensity range different from each other, the at least two image acquisition modules being configured to simultaneously photograph a target photographing region; and an HDR-type image synthesis part configured to generate an HDR image by synthesizing at least two images in an HDR synthesis manner, the at least two images being simultaneously acquired by the at least two image acquisition modules.

A difference in field of view (FOV) of the at least two image acquisition modules may be equal to or less than approximately 50%. Preferably, having the same FOV is advantageous in terms of HDR processing time, memory, and power consumption.

A light attenuator may be provided so as to cause a difference in the target sensing light intensity range between the at least two image acquisition modules.

The at least two image acquisition modules may include a first image acquisition module and a second image acquisition module, the first image acquisition module may not include the light attenuator, and the second image acquisition module may include the light attenuator.

The light attenuator may be disposed on a surface or inside of at least one selected from a casing, a lens part, and the image sensor of the at least two image acquisition modules, or may be disposed on a light path either between the casing, the lens part, and the image sensor, or outside the casing, the lens part, and the image sensor.

The light attenuator may include an electronically controlled light attenuator.

The light attenuator may include at least one selected from a liquid crystal polarizer and a light absorber.

In order to cause a difference in the target sensing light intensity range between the at least two image acquisition modules, at least one selected from a structure and a material of the image sensor of each of the at least two image acquisition modules may be configured differently.

In order to cause a difference in the target sensing light intensity range between the at least two image acquisition modules, at least one selected from a structure and a material of the image sensor of each of the at least two image acquisition modules may be configured differently while a light attenuator is used together.

An exposure characteristic of the image sensor may be controlled by controlling at least one selected from an aperture, a shutter speed, and a sensitivity (ISO) for at least one of the at least two image acquisition modules.

According to another aspect of the present disclosure, there is provided a High Dynamic Range (HDR) image acquisition method including: acquiring at least two images of a same time period by simultaneously photographing a target photographing region by using at least two image acquisition modules configured such that each of the at least two image acquisition modules includes an image sensor and has a target sensing light intensity range different from each other; and generating an HDR image by synthesizing the at least two images in an HDR synthesis manner.

The HDR image acquisition method may further include, after the acquiring of the at least two images, determining whether a luminance-saturated pixel exists in at least one of the at least two images. Here, a luminance-saturated pixel level is capable of being set to an arbitrary designed value. Furthermore, in the determining of whether a luminance-saturated pixel exists, when a luminance-saturated pixel exists, the at least two images may be synthesized in the HDR synthesis manner.

The HDR image acquisition method may further include, between the acquiring of the at least two images and the determining of whether a luminance-saturated pixel exists, identifying at least one region in the at least two images.

The HDR image acquisition method may further include, after the acquiring of the at least two images, determining whether a noise level pixel or a pixel having an arbitrary level higher than a noise level exists in at least one of the at least two images. In the determining of whether a noise level pixel or a pixel having an arbitrary level higher than the noise level exists, when a noise level pixel or a pixel having an arbitrary level higher than the noise level exists, the at least two images may be synthesized in the HDR synthesis manner.

The HDR image acquisition method may further include, between the acquiring of the at least two images and the determining of whether a noise level pixel or a pixel having an arbitrary level higher than the noise level exists, identifying at least one region in the at least two images.

A difference in field of view (FOV) of the at least two image acquisition modules may be equal to or less than approximately 50%.

A light attenuator may be used so as to cause a difference in the target sensing light intensity range between the at least two image acquisition modules.

The at least two image acquisition modules may include a first image acquisition module and a second image acquisition module, the first image acquisition module may not include the light attenuator, and the second image acquisition module may include the light attenuator.

In order to cause a difference in the target sensing light intensity range between the at least two image acquisition modules, at least one selected from a structure and a material of the image sensor of each of the at least two image acquisition modules may be configured differently.

In order to cause a difference in the target sensing light intensity range between the at least two image acquisition modules, at least one selected from a structure and a material of the image sensor of each of the at least two image acquisition modules may be configured differently while a light attenuator is used together.

According to aspects of the present disclosure described above, the apparatus and method capable of acquiring an HDR image without a ghost effect such as a ghost artifact may be realized. In addition, according to embodiments of the present disclosure, the apparatus and method capable of providing an HDR image in real time (or almost real time) for a still image as well as a moving image may be realized, the HDR image having a high level of dynamic range. In addition, according to embodiments of the present disclosure, the apparatus and method capable of being usefully applied to the fields of autonomous driving, robotics, extended reality (XR), augmented reality (AR), three-dimensional (3D) cameras, and so on may be realized, and the apparatus and method being capable of preventing errors, malfunctions, and so on in a vision system may also be realized.

According to an embodiment of the present disclosure, since images with the same or similar FOV at the same time period are acquired by using the at least two image acquisition modules (camera modules) with different target sensing light intensity ranges and then the images are blended in the HDR synthesis manner, disadvantages and problems of the conventional HDR methods may be reduced or solved.

First, an embodiment of the present disclosure may be advantageous in expanding a limited HDR. For example, a very wide HDR may be realized according to the attenuation rate of the light attenuator (the fixed-type light attenuator or the electronically controlled light attenuator). When a shutter, an aperture, and so on are used in a conventional manner, an order is increased by about one order. However, in an embodiment of the present disclosure, when HDR blending is performed on a plurality of image frames which has a luminance difference and which is acquired by the plurality of image acquisition modules (camera modules), an HDR of about 240 dB may be realized. As a non-limiting example, in an embodiment of the present disclosure, various combinations of attenuation rates between a camera module photographing an image with a relatively high luminance and a camera module photographing an image with a relatively low luminance may realize attenuation of more than 10,000 times, which may be advantageous for expanding dynamic range.

Second, an embodiment of the present disclosure may fundamentally eliminate a ghost artifact problem. In an embodiment of the present disclosure, since a plurality of images with the luminance differences at the same time period is capable of being acquired by using the plurality of image acquisition modules (camera modules), a ghost artifact that occurs in a conventional method in which an exposure time is controlled and images acquired at different time periods are used may be prevented.

Third, an embodiment of the present disclosure may have an effect of reducing the time consumption and the power consumption. In an embodiment of the present disclosure, since images with the same or similar FOV are acquired by using the plurality of image acquisition modules (camera modules) and then HDR blending is performed on the images, positions of subjects between the images may be the same or almost the same, and the time consumption and the power consumption required for HDR blending may be reduced.

Fourth, according to an embodiment of the present disclosure, a high-speed HDR imaging operation is capable of being realized, and a high-performance HDR imaging capable of distinguishing and identifying subjects in various light intensity (light power) environments such as day and night may be realized.

In addition, according to an embodiment of the present disclosure, an HDR image is capable of being realized by the simple HDR blending without the need for a separate semiconductor image sensor process development. When the quantum efficiency of the light detector inside the camera is changed, a separate element design and a separate process development may be required.

The HDR image acquisition apparatus and related method according to an embodiment of the present disclosure may be applied to acquire a high-quality 3D image or high-quality 3D moving image in various environments and conditions. For example, the HDR image acquisition apparatus and related method according to an embodiment of the present disclosure may be applied to various fields such as autonomous driving, robotics, extended reality (XR), 3D cameras, aerial photography, and so on.

However, the effects of the present disclosure are not limited to the above effects and may be expanded in various ways without departing from the technological spirit and scope of the present disclosure.

BRIEF DESCRIPTION OF THE DRAWINGS

The above and other objectives, features, and other advantages of the present disclosure will be more clearly understood from the following detailed description when taken in conjunction with the accompanying drawings, in which:

FIG. 1 is a photograph illustrating a problem caused by a limitation in dynamic range of an image sensor;

FIG. 2 is a view illustrating a High Dynamic Range (HDR) image acquisition apparatus according to an embodiment of the present disclosure;

FIG. 3 is a view illustrating a principle in which dynamic range is increased by the HDR image acquisition apparatus according to an embodiment of the present disclosure;

FIG. 4 is a view illustrating the HDR image acquisition apparatus according to another embodiment of the present disclosure;

FIG. 5 is a cross-sectional view illustrating a plurality of image acquisition modules capable of being applied to the HDR image acquisition apparatus according to an embodiment of the present disclosure;

FIG. 6 is a cross-sectional view illustrating a plurality of image acquisition modules capable of being applied to the HDR image acquisition apparatus according to another embodiment of the present disclosure;

FIG. 7 is a cross-sectional view exemplarily illustrating each configuration of an image sensor and light attenuator that are capable of being applied to the HDR image acquisition apparatus according to an embodiment of the present disclosure;

FIG. 8 is a cross-sectional view exemplarily illustrating each configuration of an image sensor and light attenuator that are capable of being applied to the HDR image acquisition apparatus according to another embodiment of the present disclosure;

FIG. 9 and FIG. 10 are views illustrating unit pixel structures in first and second image sensors and power of input light thereto, the first and second image sensors being capable of being applied to the HDR image acquisition apparatus according to an embodiment of the present disclosure;

FIG. 11 is a graph exemplarily showing a relative response characteristic after performing HDR blending, the relative response characteristic being capable of being realized by the HDR image acquisition apparatus according to an embodiment of the present disclosure;

FIG. 12 is a graph exemplarily showing a relative response characteristic after performing HDR blending, the relative response characteristic being capable of being realized by the HDR image acquisition apparatus according to another embodiment of the present disclosure;

FIG. 13 is a graph exemplarily showing a relative response characteristic after performing HDR blending, the relative response characteristic being capable of being realized by the HDR image acquisition apparatus according to yet another embodiment of the present disclosure;

FIG. 14 is a block diagram illustrating the HDR image acquisition apparatus according to an embodiment of the present disclosure;

FIG. 15 is a flowchart showing an HDR image acquisition method according to an embodiment of the present disclosure;

FIG. 16 is a view illustrating a plurality of image frames capable of being acquired in process S100 in FIG. 15;

FIG. 17 is a flowchart showing the HDR image acquisition method according to another embodiment of the present disclosure;

FIG. 18 is a flowchart showing the HDR image acquisition method according to yet another embodiment of the present disclosure;

FIG. 19 is a flowchart showing the HDR image acquisition method according to still another embodiment of the present disclosure;

FIG. 20 is a flowchart showing the HDR image acquisition method according to a further embodiment of the present disclosure;

FIG. 21 is a flowchart showing the HDR image acquisition method according to still a further embodiment of the present disclosure; and

FIG. 22 is a flowchart showing the HDR image acquisition method according to yet a further embodiment of the present disclosure.

DETAILED DESCRIPTION

Hereinafter, embodiments of the present disclosure will be described in detail with reference to the accompanying drawings.

FIG. 2 is a view illustrating a High Dynamic Range (HDR) image acquisition apparatus according to an embodiment of the present disclosure.

Referring to FIG. 2, an HDR image acquisition apparatus according to an embodiment of the present disclosure may include at least two image acquisition modules 10a and 10b. Each of the at least two image acquisition modules 10a and 10b may include an image sensor. Each of the at least two image acquisition modules 10a and 10b may be a type of camera module. Target sensing light intensity ranges for the image sensors of the at least two image acquisition modules 10a and 10b may be different from each other. Here, the target sensing light intensity range may correspond to or may be related to an average light receiving amount or an average photoelectric conversion amount (an average photoelectric conversion amount per unit time) of the image sensor. Therefore, the at least two image acquisition modules 10a and 10b may have average light receiving amounts different from each other. Furthermore, the average photoelectric conversion amounts of the at least two image acquisition modules 10a and 10b may be different from each other. The target sensing light intensity ranges of the at least two image acquisition modules 10a and 10b may be generated intentionally to be different from each other.

In addition, the at least two image acquisition modules 10a and 10b may be configured to simultaneously photograph a target photographing region.

The at least two image acquisition modules 10a and 10b may simultaneously photograph one target photographing region. Photographing regions photographed by the at least two image acquisition modules 10a and 10b may be identical or substantially identical. The at least two image acquisition modules 10a and 10b may be disposed adjacent to each other, and may be arranged to face the same direction. As a non-limiting example, a distance between the at least two image acquisition modules 10a and 10b may be equal to or less than about 2 cm. In an embodiment in FIG. 2, the at least two image acquisition modules 10a and 10b may include a first image acquisition module 10a and a second image acquisition module 10b. As required, three or more image acquisition modules may be used.

The HDR image acquisition apparatus may include an HDR-type image synthesis part 50 configured to generate an HDR image by synthesizing at least two images simultaneously acquired by the at least two image acquisition modules 10a and 10b in an HDR synthesis manner. The HDR-type image synthesis part 50 may be electrically connected to the at least two image acquisition modules 10a and 10b. The HDR-type image synthesis part 50 may be referred to as an HDR blender.

According to an embodiment, the at least two image acquisition modules 10a and 10b may include the first image acquisition module 10a configured to receive a relatively high amount of light and the second image acquisition module 10b configured to receive a relatively low amount of light. The average light receiving amount (or the average photoelectric conversion amount) of the first image acquisition module 10a may be relatively higher than the average light receiving amount of the second image acquisition module 10b, and the average light receiving amount (or the average photoelectric conversion amount) of the second image acquisition module 10b may be relatively lower than the average light receiving amount of the first image acquisition module 10a. For example, the average light receiving amount (or the average photoelectric conversion amount) of the first image acquisition module 10a and the average light receiving amount (or the average photoelectric conversion amount) of the second image acquisition module 10b may differ from each other by several times or more, tens of times or more, or hundreds of times or more.

In a photographing target region to be photographed by the at least two image acquisition modules 10a and 10b, a high luminance subject such as the sun and a low luminance subject such as a tree (tree shadow) may coexist. The first image acquisition module 10a, which is configured to receive a relatively high amount of light, may perform a function of clearly imaging a surface and boundary of a low luminance subject and acquiring an image of the low luminance subject. The first image acquisition module 10a may have relative difficulty in clearly imaging a high luminance subject. For example, in an image acquired by the first image acquisition module 10a, imaging of a high luminance subject such as the sun and imaging of a region around the high luminance subject may be difficult to be performed due to excessively bright light. Meanwhile, the second image acquisition module 10b, which is configured to receive a relatively low amount of light, may perform a function of clearly imaging a surface and boundary of a high luminance subject and acquiring an image of the high luminance subject. The second image acquisition module 10b may have relative difficulty in clearly imaging low luminance subject. By intentionally reducing an average light receiving amount (an average photoelectric conversion amount) at the image sensor of the second image acquisition module 10b, clear imaging of a high luminance subject such as the sun by using the second image acquisition module 10b may be realized.

The HDR-type image synthesis part 50 may synthesize images simultaneously photographed by the first and second image acquisition modules 10a and 10b in the HDR synthesis manner. For example, the HDR-type image synthesis part 50 may select an image region of a low luminance subject such as a tree (tree shadow) from an image acquired by the first image acquisition module 10a, may select an image region of a high luminance subject such as the sun from an image acquired by the second image acquisition module 10b, and may synthesize the image regions according to a predetermined method. Therefore, in the HDR image generated by the HDR-type image synthesis part 50, imaging of both the high luminance subject and the low luminance subject may be clearly realized. In other words, an image having a significantly wide dynamic range is capable of being acquired. All of general HDR synthesis methods may be applicable to the HDR-type image synthesis part 50.

According to an embodiment of the present disclosure, a ghost artifact problem may be fundamentally eliminated. In an embodiment, since the at least two image acquisition modules 10a and 10b are used to acquire a plurality of images having luminance differences at the same time, a ghost artifact that occurs in a conventional method in which an exposure time is controlled and images acquired at different time periods are used may be prevented. Therefore, the HDR image acquisition apparatus without a ghost effect is capable of being realized, i.e., the ghost effect-free HDR image acquisition apparatus is capable of being realized.

In an embodiment of the present disclosure, an HDR camera apparatus (system) without a ghost artifact is capable of being realized by photographing the same image at the same time for each frame (in case of a moving image) by using an image sensor part configured to receive a high amount of light and an image sensor part configured to receive a low amount of light and by merging the two images. As a more specific example, since an image sensor part (camera module) for receiving a low amount of light may be provided with a light attenuator, such as a light blocking film, configured to intentionally reduce light transmission (there may be no light attenuator in an image sensor part for receiving a high amount of light), imaging of a surface of a high luminance subject may be more clearly realized. Conversely, the image sensor part (camera module) for receiving a high amount of light may acquire an image of a low luminance subject by performing clear imaging of a surface of the low luminance subject. Furthermore, by synthesizing (merging) the plurality of images, an HDR image may be realized. As the image sensor parts are capable of simultaneously photographing the same scene in real time and the photographed images are synthesized at the same time, an HDR image without a ghost artifact may be acquired.

According to an embodiment, a difference in a field of view (FOV) of the at least two image acquisition modules 10a and 10b may be small to within about 50%. Preferably, each FOV of the at least two image acquisition modules 10a and 10b may be the same. In this regard, the at least two image acquisition modules 10a and 10b may simultaneously photograph the same region or almost the same region. Therefore, positions and boundaries of subjects in an image acquired by the first image acquisition module 10a and position and boundaries of subjects in an image acquired by the second image acquisition module 10b may be the same or almost the same. Accordingly, there are effects that synthesizing of the plurality of images in the HDR synthesis manner in the HDR-type image synthesis part 50 may be conveniently performed and that time consumption and power consumption are reduced.

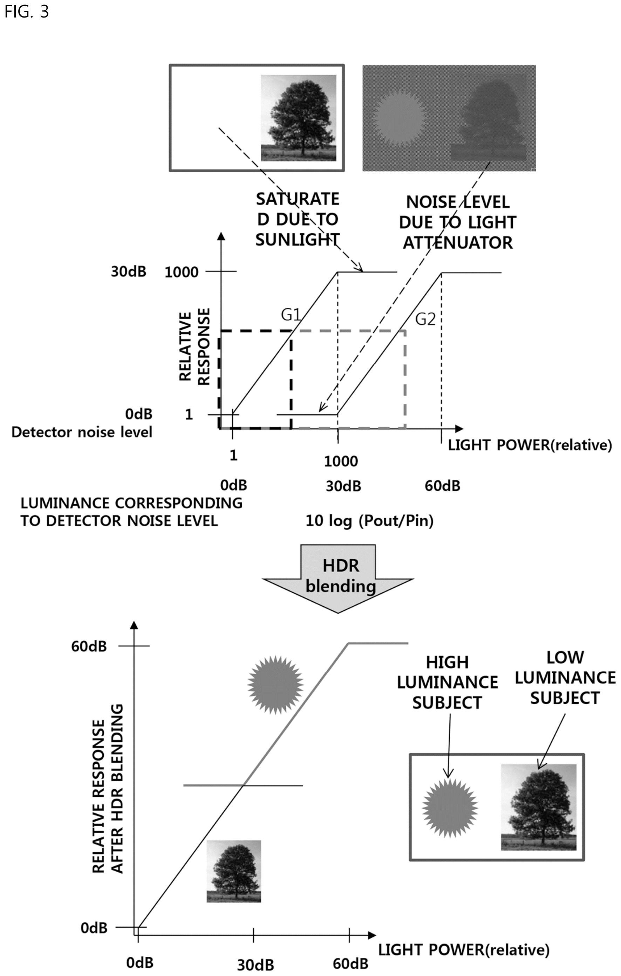

FIG. 3 is a view illustrating a principle in which dynamic range is increased by the HDR image acquisition apparatus according to an embodiment of the present disclosure.

Referring to FIG. 3, a first graph curve G1 exemplarily illustrates a relative response characteristic of the image sensor of the first image acquisition module 10a in FIG. 2 with respect to light power (relative light power). A second graph curve G2 exemplarily illustrates a relative response characteristic of the image sensor of the second image acquisition module 10b in FIG. 2 with respect to light power (relative light power). A predetermined light attenuator may be applied to the second image acquisition module 10b, and an amount of light that the image sensor receives may be reduced by the light attenuator. Here, an attenuation rate by the light attenuator is assumed to be 1000 times (i.e., 1/1000 attenuation).

The first graph curve G1 may include a noise level region (a flat region) at a lower portion thereof, a luminance saturation region (a flat region) at an upper portion thereof, and an effective region (an intermediate region) between the noise level region and the luminance saturation region. In the luminance saturation region, the luminance is saturated by sunlight, so that imaging of a subject may be difficult to be performed. In the second graph curve G2, incident light is attenuated by the light attenuator, so that imaging is capable of being performed even in a relatively high light power region (a high luminance region). The second graph curve G2 may include a noise level region (a flat region) at a lower portion thereof, a luminance saturation region (a flat region) at an upper portion thereof, and an effective region (an intermediate region) between the noise level region and the luminance saturation region. Here, the noise level region may be a region where a low luminance subject is imaged at a noise level due to the light attenuator. In the second graph curve G2, imaging of a high luminance subject such as the sun may be performed within the effective region (the intermediate region).

Through HDR blending, the effective region of the first graph curve G1 and the effective region of the second graph curve G2 may be combined (merged). In other words, an image region of a subject having a relatively low luminance in an image acquired by the first image acquisition module 10a and an image region of a subject having a relatively high luminance in an image acquired by the second image acquisition module 10b may be synthesized into a single image. As a result, in an HDR image, both the high luminance subject(s) and the low luminance subject(s) may be clearly imaged.

In FIG. 3, it is exemplarily illustrated that an image having a dynamic range of up to 60 dB is capable of being realized by using the two image acquisition modules provided with the image sensors having a relatively small dynamic range of 30 dB. In other words, an effect of expanding the dynamic range to n times (for example, 2 times on a dB scale and 1000 times on a linear numerical value scale) may be acquired. At this time, the light attenuation rate applied to the second image acquisition module is assumed to be 1000 times. However, the dB range and the light attenuation rate applied in FIG. 3 are merely examples, and may vary. In addition, in FIG. 3, when the effective region of the first graph curve G1 and the effective region of the second graph curve G2 are combined, portions of the two effective regions may overlap each other. In this regard, image regions corresponding to the middle luminance in the two images may be used together, or may be optionally used as required. In FIG. 3, $P_{in}$ represents power of incident light, and $P_{out}$ represents power of output light. The relative response may correspond to an output of the image sensor.

According to an embodiment of the present disclosure, an HDR image may be generated by synthesizing at least one image set in which an amount of light thereof is reduced and at least one image set in which an amount of light thereof is not reduced. In the conventional technology, an HDR image is generated by using image frames acquired at different time periods, so that a ghost artifact problem occurs. In an embodiment of the present disclosure, by using a plurality of camera modules (image acquisition modules) having different amounts of light (or different detector sensitivity) reaching inside image sensors, a plurality of images up to the maximum number of camera modules per unit time (that is, per frame) is capable of being acquired, so that the ghost artifact problem occurring in a subject due to time differences between frames is capable of being prevented. In addition, while using the conventional technology as it is, since the image sensor or the camera module only requires addition of, for example, the light attenuator, there are advantages in that development of new process technology is not necessary and implementation of the present disclosure is conveniently realized.

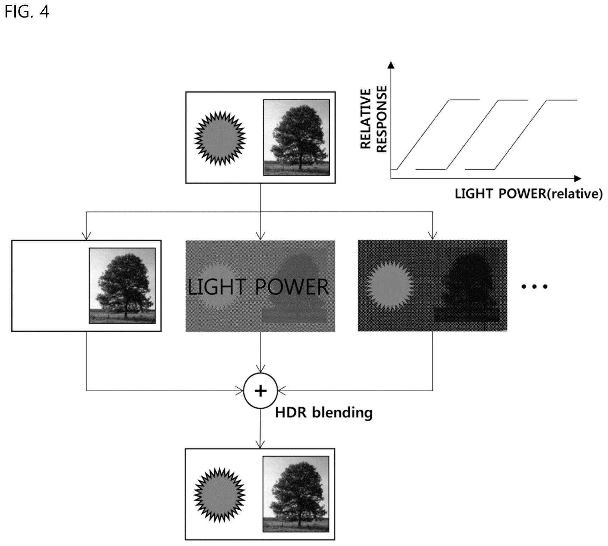

FIG. 4 is a view illustrating the HDR image acquisition apparatus according to another embodiment of the present disclosure.

Referring to FIG. 4, the HDR image acquisition apparatus according to an embodiment of the present disclosure may include three or more image acquisition modules. Each of the three or more image acquisition modules may include an image sensor, and target sensing light intensity ranges for the image sensors may be different from each other. light attenuation rates applied to each of the three or more image acquisition modules may be different from each other. The HDR image acquisition apparatus may include an HDR-type image synthesis part configured to synthesize a plurality of images simultaneously acquired from the three or more image acquisition modules in the HDR synthesis manner. In each of the plurality of images, regions may be identified and then HDR blending may be performed. At this time, in each of the plurality of images, a luminance saturation region may be identified and/or a noise level region may be identified.

According to an embodiment of the present disclosure, a light attenuator (a light modulator) may be used to cause a difference between the target sensing light intensity ranges of the at least two image acquisition modules 10a and 10b. In this case, the at least two image acquisition modules 10a and 10b may include the first image acquisition module 10a and the second image acquisition module 10b. Furthermore, the first image acquisition module 10a may not include the light attenuator, and the second image acquisition module 10b may include the light attenuator. The light attenuator may be disposed on a surface or inside of at least one selected from a casing, a lens part, and the image sensor of at least one of the at least two image acquisition modules 10a and 10b, or may be disposed on a light path either between the casing, the lens part, and the image sensor, or outside the casing, the lens part, and the image sensor and so on.

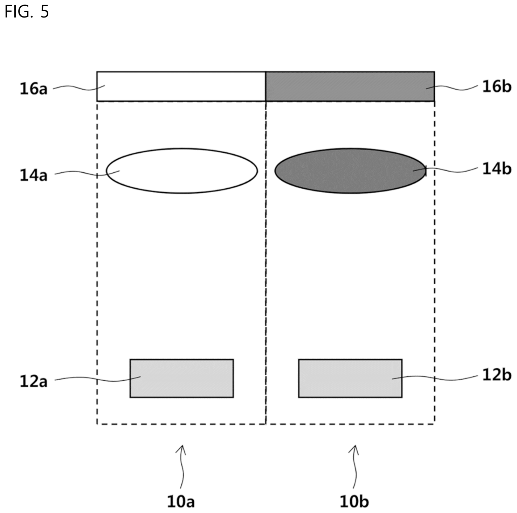

FIG. 5 is a cross-sectional view illustrating a plurality of image acquisition modules capable of being applied to the HDR image acquisition apparatus according to an embodiment of the present disclosure.

Referring to FIG. 5, the first and second image acquisition modules 10a and 10b may be disposed adjacent to each other. The first image acquisition module 10a may include a first image sensor 12a, a first lens part 14a, and a first casing part 16a. The first lens part 14a may be disposed between the first image sensor 12a and the first casing part 16a. The second image acquisition module 10b may include a second image sensor 12b, a second lens part 14b, and a second casing part 16b. The second lens part 14b may be disposed between the second image sensor 12b and the second casing part 16b.

The first image acquisition module 10a may not include the light attenuator (the light modulator), and the second image acquisition module 10b may include the light attenuator (the light modulator). At this time, in the second image acquisition module 10b, the light attenuator may be disposed on a surface or inside of at least one selected from the second casing part 16b, the second lens part 14b, and the second image sensor 12b, or may be disposed on a light path either between the second casing part 16b, the second lens part 14b, and the second image sensor 12b, or outside the second casing part 16b, the second lens part 14b, and the second image sensor 12b. The light attenuator may have a thin film shape or may have a light absorber structure. In an embodiment in FIG. 5, it is exemplarily illustrated that the second casing part 16b serves as the light attenuator and the second lens part 14b serves as the light attenuator. The second lens part 14b may include a light absorbing lens. The light attenuator may be applied to inside, above and/or below of the second casing part 16b and/or the second lens part 14b. When the thin film type light attenuator is used, manufacturing and application of the light attenuator may be easily realized.

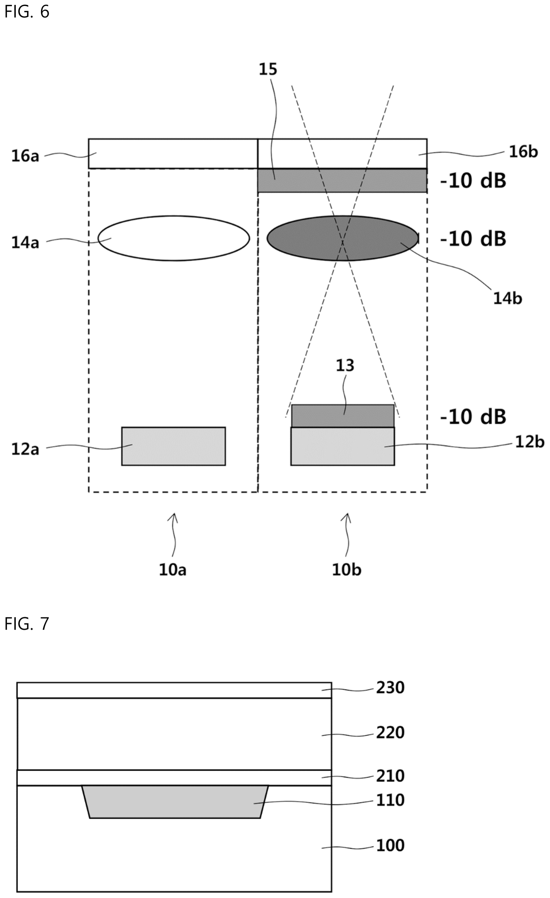

FIG. 6 is a cross-sectional view illustrating a plurality of image acquisition modules capable of being applied to the HDR image acquisition apparatus according to another embodiment of the present disclosure.

Referring to FIG. 6, the first and second image acquisition modules 10a and 10b may be disposed adjacent to each other. The first image acquisition module 10a may not include the light attenuator, and the second image acquisition module 10b may include the light attenuator. At this time, in the second image acquisition module 10b, the light attenuator may be disposed on a surface or inside of at least one selected from the second casing part 16b, the second lens part 14b, and the second image sensor 12b, or may be disposed on a light path between the second casing part 16b, the second lens part 14b, and the second image sensor 12b, or outside the second casing part 16b, the second lens part 14b, and the second image sensor 12b.

In FIG. 6, a light attenuator 13 having a thin film shape and being disposed on the surface of the second image sensor 12b and a light attenuator 15 having a thin film shape and being disposed on the surface of the second casing part 16b are used. In addition, in FIG. 6, it is exemplarily illustrated that the second lens part 14b serves as a light attenuator. As a non-limiting example, the light attenuator 15 may have a light attenuation rate corresponding to -10 dB, the second lens part 14b may have a light attenuation rate corresponding to -10 dB, and the light attenuator 13 may have a light attenuation rate corresponding to -10 dB. In this case, in the second image acquisition module 10b, the light attenuation rate may be 1000 times (10 × 10 × 10). By using the plurality of light attenuators, the light attenuation rate may be easily increased. However, the light attenuation configuration illustrated in FIG. 6 is only an example, and may be variously changed.

In addition, according to an embodiment of the present disclosure, the light attenuator may include an electronically controlled light attenuator. The characteristics of the electronically controlled light attenuator may be appropriately and electronically controlled according to a need and/or situation, and the characteristics may be appropriately controlled according to the need and/or situation and then may be utilized for HDR blending. It is preferable that the electronically controlled light attenuator is provided as the light attenuator having the thin film shape and is provided on a flat portion, but there is no limitation. The light attenuator may include at least one configuration selected from a liquid crystal polarizer, a non-liquid crystal polarizer, and a light absorber. In addition, the light attenuator may include an electrode for applying an electrical signal, and the electrode may include a transparent electrode as an example.

FIG. 7 is a cross-sectional view exemplarily illustrating each configuration of an image sensor and light attenuator that are capable of being applied to the HDR image acquisition apparatus according to an embodiment of the present disclosure.

Referring to FIG. 7, a light detector 110 may be formed on a substrate 100. The light detector 110 may be a light sensor part. In addition, although not illustrated, a driving element such as a transistor may be further formed on the substrate 100. The image sensor may include the substrate 100 and the light detector 110.

The light attenuator may be provided on the substrate 100 on which the light detector 110 is formed. The light attenuator may include a first electrode 210, a light modulating layer 220, and a second electrode 230. For example, the first electrode 210, the light modulating layer 220, and the second electrode 230 may be sequentially disposed on the light detector 110. As the light modulating layer 220, a transmissive polarizer, a polarizer operated by electrical driving, or a liquid crystal polarizer may be used. For the liquid crystal polarizer, a liquid crystal configuration applicable to a passive matrix LCD such as a Twisted Nematic (TN) LCD, a Super Twisted Nematic (STN) LCD, a Double STN (DSTN) LCD, and a Film compensated Super Twisted Nematic (FSTN) LCD may be used.

At least one of the first and second electrodes 210 and 230 may be a transparent electrode. The characteristics of the light modulating layer 220 may be changed by using the first and second electrodes 210 and 230. In this case, the light modulating layer 220 may be an electronically controlled light modulating layer. A light attenuation rate of the light detector 110 may be determined by the light modulating layer 220. In some cases, at least one of the first and second electrodes 210 and 230 may not be provided. In addition, the light modulating layer 220 may be a non-electronic light modulating layer (light attenuator) that is not electronically controlled. The non-electronic light modulating layer (light attenuator) may be referred to as a fixed-type light modulating layer (light attenuator) having fixed light control characteristics.

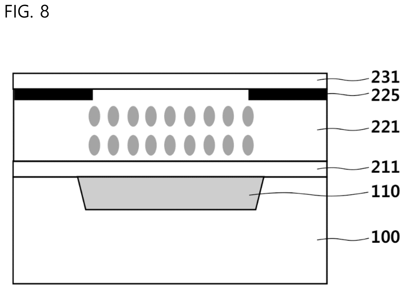

FIG. 8 is a cross-sectional view exemplarily illustrating each configuration of an image sensor and light attenuator that are capable of being applied to the HDR image acquisition apparatus according to another embodiment of the present disclosure.

Referring to FIG. 8, an electronically controlled light attenuator may be provided on the substrate 100 on which the light detector 110 is formed. The electronically controlled light attenuator may include a first electrode 211, a liquid crystal layer 221, and a second electrode 231. For example, the first electrode 211, the liquid crystal layer 221, and the second electrode 231 may be sequentially disposed on the light detector 110. The liquid crystal layer 221 may be referred to as a liquid crystal polarizer. At least one of the first and second electrodes 211 and 231 may be a transparent electrode. In addition, the electronically controlled light attenuator may further include a black matrix 225 that defines a region through which light is transmitted. The black matrix 225 may define a light transmission region for the light detector 110 while serving to block light. For example, the black matrix 225 may be disposed between the liquid crystal layer 221 and the second electrode 231, but the position of the black matrix 225 may vary. The characteristics of the liquid crystal layer 221 may be changed according to electrical signals applied to the first and second electrodes 211 and 231, and the light attenuation characteristics may be adjusted accordingly.

However, the configuration of the light attenuator illustrated in FIG. 7 and FIG. 8 is merely exemplary and may be variously modified according to circumstances.

According to another embodiment of the present disclosure, in order to cause a difference in the target sensing light intensity range of the at least two image acquisition modules 10a and 10b in the HDR image acquisition apparatus, at least one of the structure and material of the image sensor of the at least two image acquisition modules 10a and 10b may be configured differently, and the light attenuator described above may not be used. The at least two image sensors may have a sensitivity difference so that an average light receiving amount difference is realized. For example, the sensitivity difference may be induced by intentionally manufacturing the image sensor smaller or larger, by making pixel sizes of the image sensor different, by using different materials for the image sensor, or by making configurations of the image sensor different. When making configurations of the image sensor different, for example, a thickness of an absorption layer may be made thinner or thicker. In this regard, configurations such as Si + Si, Si + InGaAs, CMOS + CMOS, CCD + CCD, CCD + CMOS, CMOS + Quantum Well Infrared Photodetector (QWIP), and Avalanche PhotoDiode (APD) may be used, and configurations including color + black-and-white, color + black-and-white + infrared may also be used. An incident wavelength of the image sensor may be in a wavelength range such as a radiation wavelength range including gamma rays and X-rays, a visible light wavelength range, an infrared wavelength range, a mid-infrared wavelength range, and so on.

In addition, according to another embodiment of the present disclosure, in order to cause a difference in the target sensing light intensity range of the at least two image acquisition modules 10a and 10b in the HDR image acquisition apparatus, at least one of the structure and material of the image sensor of the at least two image acquisition modules 10a and 10b may be configured differently, and the light attenuator described above may be used together. That is, it is also possible to cause the difference in the target sensing light intensity range by mixing the two methods described above.

In addition, the technology according to embodiments of the present disclosure may be used in parallel with the conventional method for implementing an HDR image. For example, the HDR image acquisition apparatus according to an embodiment may be configured such that exposure characteristics of the image sensor are capable of being controlled by controlling at least one selected from an aperture, a shutter speed, and a sensitivity (ISO) of at least one of the two image acquisition modules 10a and 10b, and may be configured such that the method for controlling at least one selected from the aperture, the shutter speed, and the sensitivity (ISO) may be used as an auxiliary method for acquiring an HDR image. Since the aperture has a limit (< about 30 times) in modulating the amount of light, there may be a limit to increasing the scope of the HDR implementation, so it may be preferable to utilize the controlling of the shutter speed and the sensitivity (ISO) together with the technology according to embodiments of the present disclosure.

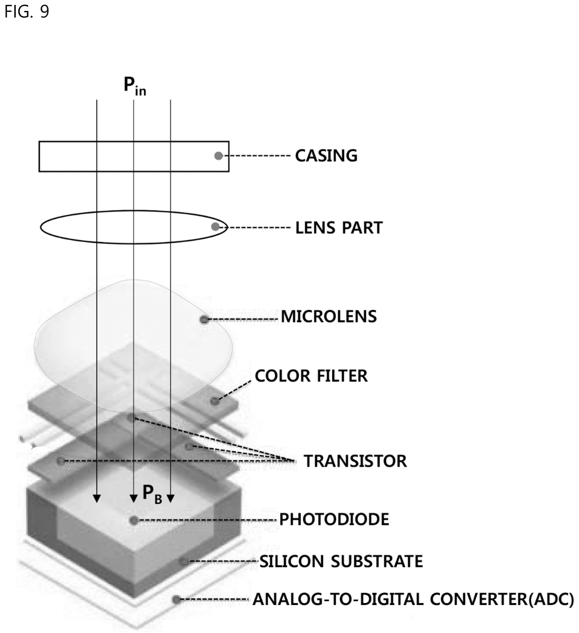

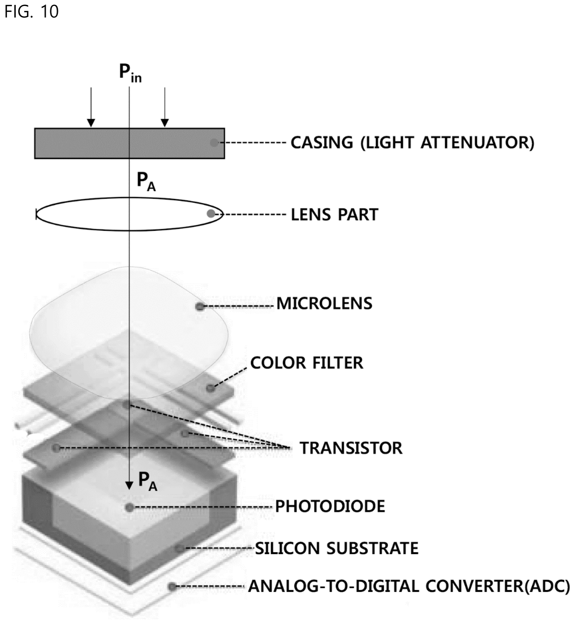

FIG. 9 and FIG. 10 are views illustrating unit pixel structures in first and second image sensors and power of input light thereto, the first and second image sensors being capable of being applied to the HDR image acquisition apparatus according to an embodiment of the present disclosure.

Referring to FIG. 9, a unit pixel structure of the first image sensor in which the light attenuator is not applied and power of input light thereto are exemplarily illustrated. Here, the transmittance of a casing is assumed to be 100%. Light attenuation by the casing, a lens part, a filter, a transistor, a metal, an anti-reflection film, and so on is very small, so that the light attenuation may be negligible. Incident light may be denoted as $P_{in}$, and power of input light to the light detector may be denoted as $P_B$.

Referring to FIG. 10, a unit pixel structure of the second image sensor in which the light attenuator is applied and power of input light thereto are exemplarily illustrated. Here, the light attenuator may be applied to the casing. An attenuation rate by the light attenuator may be represented as the following equation. a (attenuation rate) = $P_A$ / $P_{in}$. An internal light attenuation is very small, so that the internal light attenuation may be negligible. Power of input light to the light detector may be denoted as $P_A$.

A basic principle of an embodiment of the present disclosure may be implementing an HDR image by blending frame images in the HDR synthesis manner, wherein the frame images having luminance differences are acquired from a plurality of camera modules by differentiating average photoelectric conversion amounts per unit time. For example, in order to generate a difference (difference in image luminance) in the average amount of light conversion per unit time in two identical camera modules (two camera modules having the same image sensor material, the same sensor size, the same controller such as a readout integrated circuit and so on), the light attenuator may be applied to a transparent casing in front of a lens of any one of the camera modules. For convenience of the description, it is assumed that in a single wavelength environment, a subject to which the camera modules are directed has the same color and the same luminance/brightness, and that input light power $P_{in}$ is incident.

An average photoelectric conversion amount ($I_B$) of a pixel of a camera module that does not have a light attenuating part, i.e., a bright camera module, may be expressed as Equation 1 below, and an electric charge amount ($Q_B$) charged to a pixel capacitor per frame may be expressed as Equation 2 below.

$$[\text{Equation 1}]$$

$$I_B = P_B \, \eta \, \frac{q}{E}$$

$$[\text{Equation 2}]$$

$$Q_B = I \times t = P_B \, \eta \, \frac{q}{E} \times t$$

Here, $\eta$ represents an internal quantum efficiency of a light detector (a photodiode), and $P_B$ represents power input to the light detector (attenuation occurs through a lens, a filter, a transistor, and so on). $P_B$ may be expressed as the following equation. $P_B = P_{in} \times (P_{out} / P_{in})$. $a_{int}$ (= $P_{out}$ / $P_{in}$, $P_{out}$= $P_B$) may be an internal light attenuation rate due to a lens, a filter, a transistor, and so on. E represents a photon energy, q represents a charge amount, t represents a time per frame, and Q represents a photoelectrically converted charge amount per frame. q/E is a constant, and $a_{int}$ may be ignored (1: no attenuation) in order to simplify the calculation. In this case, $Q_B$ may be expressed as the following Equation 3.

[Equation 3]

$$Q_B = P_{in}\, \eta\, \frac{q}{E} \times t$$

Meanwhile, when an average photoelectric conversion amount $(I_D)$ of a pixel of a camera module having a light attenuating part, i.e., a dark camera module, is applied to the equation described above, the average photoelectric conversion amount $(I_D)$ of a pixel of the dark camera module may be expressed as Equation 4 below, and an electric charge amount $(Q_D)$ charged to a pixel capacitor per frame may be expressed as Equation 5 below.

[Equation 4]

$$I_D = \frac{P_{out}}{P_{in}} \times P_{in}\, \eta\, \frac{q}{E}$$

[Equation 5]

$$Q_D = I \times t = a \times P_{in}\, \eta\, \frac{q}{E} \times t$$

In the dark camera module, without changing efficiency of the image sensing part, a current and a charge amount may be reduced by lowering power (a $\times P_{in}$) input to the light detector by attenuating light $(P_{in})$ input to the sensor by the attenuation rate $(a = P_{out} / P_{in})$ compared to that of the bright camera module.

In addition, $P_{out} / P_{in} = I_D / I_B = Q_D / Q_B$. Furthermore, by controlling input light power incident to the inside of the light detector of an image sensor array inside the camera module, an embodiment of the present disclosure may realize at least one image of a high light power subject (the sun) and at least one image of a low light power subject (a tree) by performing the HDR blending.

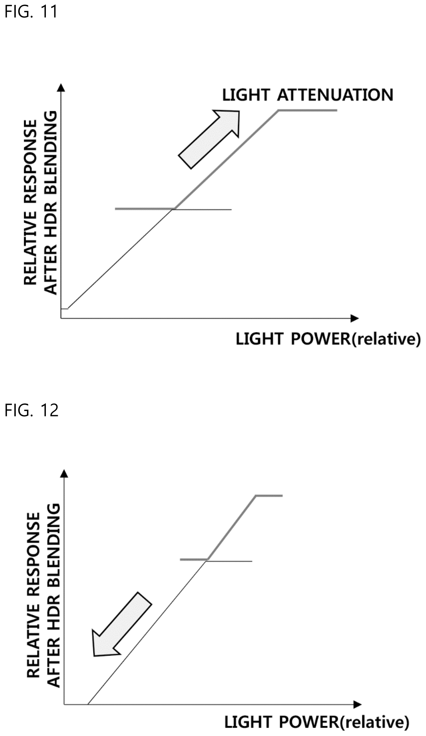

FIG. 11 is a graph exemplarily showing a relative response characteristic after performing HDR blending, the relative response characteristic being capable of being realized by the HDR image acquisition apparatus according to an embodiment of the present disclosure.

Referring to FIG. 11, the light attenuation may be applied to a full wavelength band or to a partial wavelength band. For a color image, it may be preferable to apply the light attenuation to the full wavelength band. For a black and white image or an infrared image, the light attenuation to a partial wavelength band may be performed. The attenuation rate of the light attenuator may be fixed, or may be variable (controllable). A fixed-type light attenuator may have a lower cost. A thin film-type light attenuator may also have economic advantages. When a controllable light attenuator such as a transmissive polarizer or a liquid crystal layer is used, a wider dynamic range may be realized with a smaller image and a better image quality. When a plurality of light attenuators is applied on a light path, the total attenuation rate may be a product of individual attenuation rates.

FIG. 12 is a graph exemplarily showing a relative response characteristic after performing HDR blending, the relative response characteristic being capable of being realized by the HDR image acquisition apparatus according to another embodiment of the present disclosure.

Referring to FIG. 12, the internal quantum efficiency $\eta$ of the light detector may be controlled with respect to the amount of charge $Q_B$ charged to the pixel capacitor per frame. An external quantum efficiency may be increased by a fill factor per pixel. By increasing an inner thickness of the light detector, the internal quantum efficiency may be increased. Under the same fill factor and internal thickness conditions, the internal quantum efficiency may be controlled by using a material having a high absorption coefficient at the same wavelength. Compared to direct bandgap materials (e.g., GaAs, In-GaAs, InP), indirect bandgap materials such as Si may have a lower absorption coefficient for a light wavelength corresponding to energy near the bandgap. A quantum efficiency may also be adjusted by controlling the thickness of the absorption layer. A Charge Coupled Device (CCD) may have higher efficiency compared to that of a CMOS image sensor. In addition, when an area of each pixel increases, the charge amount per pixel may increase and a signal-to-noise ratio (S/N ratio) may also increase, so that an effect similar to an increase in efficiency may be realized.

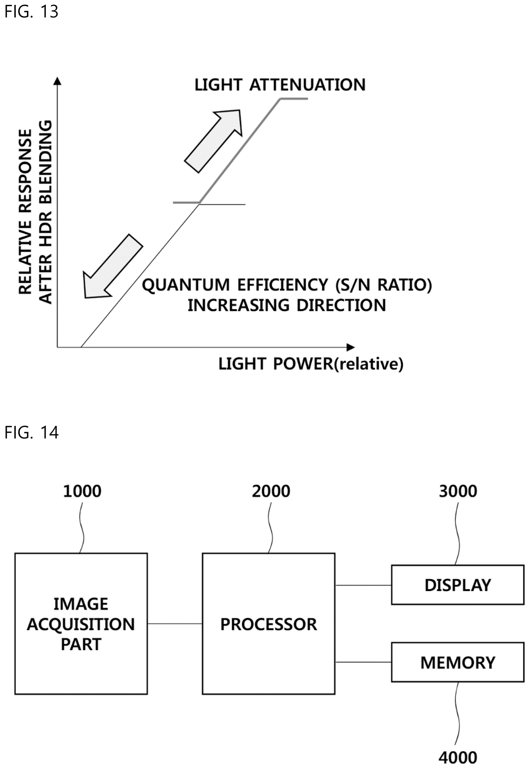

FIG. 13 is a graph exemplarily showing a relative response characteristic after performing HDR blending, the relative response characteristic being capable of being realized by the HDR image acquisition apparatus according to yet another embodiment of the present disclosure.

Referring to FIG. 13, in an embodiment of the present disclosure, when the light attenuator (light modulator) and the sensitivity difference of the image sensor are used simultaneously, the dynamic range may be further widened. In other words, when the quantum efficiency control and the light attenuation are used simultaneously, an effect of further widening the dynamic range may be acquired.

FIG. 14 is a block diagram illustrating the HDR image acquisition apparatus according to an embodiment of the present disclosure.

Referring to FIG. 14, the HDR image acquisition apparatus according to an embodiment of the present disclosure may include an image acquisition part 1000, a processor 2000, a display 3000, and a memory 4000. The image acquisition part 1000 may include at least two image acquisition modules. Each of the at least two image acquisition modules may include an image sensor, and target sensing light intensity ranges for the image sensors may be different from each other. The at least two image acquisition modules may be configured to simultaneously photograph a target photographing region. The processor 2000 may include an HDR-type image synthesis part. The HDR-type image synthesis part may serve to generate an HDR image by synthesizing a plurality of images simultaneously acquired by the at least two image acquisition modules in an HDR synthesis manner.

The display 3000 may at least serve to display the generated HDR image. The memory 4000 may store the generated HDR image, and may also store information related to a function performance of the processor 2000. The processor 2000 may be connected to the image acquisition part 1000, the display 3000, and the memory 4000, and may serve to control the image acquisition part 1000, the display 3000, and the memory 4000. The HDR image acquisition apparatus may further include a communication part as required.

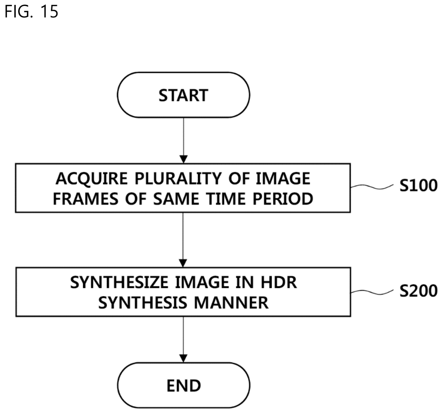

FIG. 15 is a flowchart showing an HDR image acquisition method according to an embodiment of the present disclosure.

Referring to FIG. 15, an HDR image acquisition method according to an embodiment of the present disclosure may include: acquiring at least two images of the same time period by simultaneously photographing a target photographing region by using at least two image acquisition modules configured such that each of the at least two image acquisition modules includes an image sensor and has a target sensing light intensity range different from each other (S100); and generating an HDR image by synthesizing the at least two images in an HDR synthesis manner (S200). Here, the at least two images may be at least two (i.e., a plurality of) image frames.

According to an embodiment, the HDR image acquisition method may further include, after the acquiring of the at least two images (S100), determining whether a luminance-saturated pixel exists in at least one of the at least two images. In the determining of whether a luminance-saturated pixel exists, when a luminance-saturated pixel exists, the at least two images may be synthesized in the HDR synthesis manner. In addition, the HDR image acquisition method may further include, between the acquiring of the at least two images (S100) and the determining of whether a luminance-saturated pixel exists, identifying at least one region in the at least two images.

According to an embodiment, the HDR image acquisition method may further include, after the acquiring of the at least two images (S100), determining whether a noise level pixel or a pixel having an arbitrary level higher than a noise level exists in at least one of the at least two images. In the determining of whether a noise level pixel or a pixel having an arbitrary level higher than the noise level exists, when a noise level pixel or a pixel having an arbitrary level higher than the noise level exists, the at least two images may be synthesized in the HDR synthesis manner. In addition, the HDR image acquisition method may further include, between the acquiring of the at least two images (S100) and the determining of whether a noise level pixel or a pixel having an arbitrary level higher than the noise level exists, the identifying of at least one region in the at least two images.

In the HDR image acquisition method described above, the difference in the FOV of the at least two image acquisition modules may be equal to or less than approximately 50% as an example. A light attenuator may be used to cause the difference in the target sensing light intensity range of the at least two image acquisition modules. The at least two image acquisition modules may include first and second image acquisition modules, the first image acquisition module may not include the light attenuator, and the second image acquisition module may include the light attenuator. In order to cause the difference in the target sensing light intensity range of the at least two image acquisition modules, at least one selected from a structure and a material of each image sensor of the at least two image acquisition modules may be configured differently from each other. Otherwise, in order to cause the difference in the target sensing light intensity range of the at least two image acquisition modules, at least one selected from the structure and the material of each image sensor of the at least two image acquisition modules may be configured differently, and the light attenuator may be used together. In addition, all the descriptions described in the HDR image acquisition apparatus with reference to FIG. 1 to FIG. 14 may be applied to the HDR image acquisition method according to an embodiment in FIG. 15.

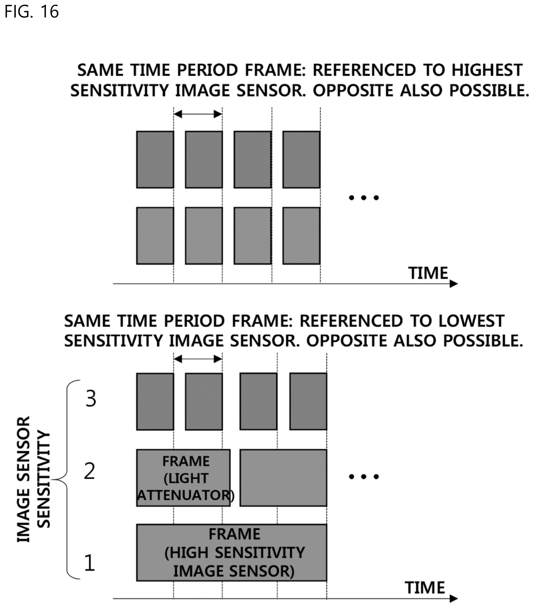

FIG. 16 is a view illustrating a plurality of image frames capable of being acquired in process S100 in FIG. 15.

Referring to FIG. 16, in the HDR image acquisition method according to an embodiment of the present disclosure, a plurality of image frames of the same time period may be acquired by using the plurality of image acquisition modules. The method of acquiring a plurality of image frames of the same time period may be performed on the basis of the highest sensitivity image sensor or the lowest sensitivity image sensor. Squares illustrated in FIG. 16 show image frames.

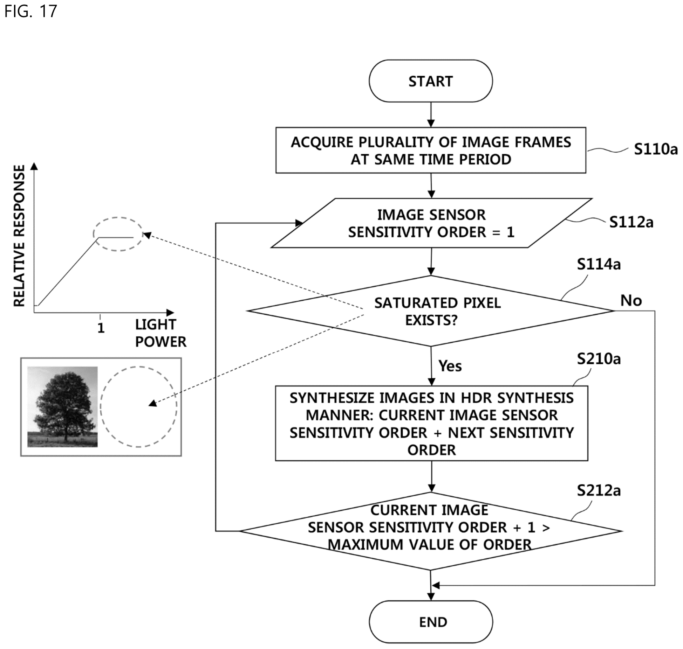

FIG. 17 is a flowchart showing the HDR image acquisition method according to another embodiment of the present disclosure.

Referring to FIG. 17, the HDR image acquisition method according to the present embodiment may include: acquiring a plurality of images of the same time period (S110a); setting an image sensor sensitivity order (level) (S112a); determining whether a luminance-saturated pixel exists in at least one of the plurality of images (S114a); synthesizing the plurality of images in an HDR synthesis manner (S210a); and increasing the image sensor sensitivity order (level) by one level (S212a). In process S114a, when there is no luminance-saturated pixel, all parts within the images may be present in an appropriate range, so that the process may end with the current images. In process S212a, the maximum value of the order may be 3 as a non-limiting example (see FIG. 16). For the method in FIG. 17, the content previously described in FIG. 15 and FIG. 16 may be referred to.

In addition, a saturated pixel level may be set to an arbitrarily designed value. For example, the saturated pixel level may be designed to be 0.5 rather than 1. Even though the saturation actually occurs at 1, an image at the 0.5 level may be used for HDR blending.

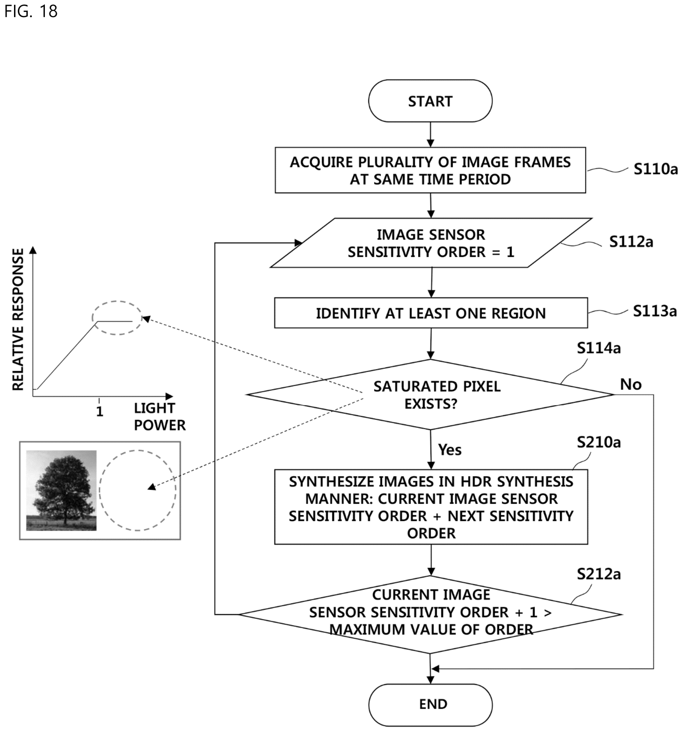

FIG. 18 is a flowchart showing the HDR image acquisition method according to yet another embodiment of the present disclosure. FIG. 18 illustrates a modification of the embodiment illustrated in FIG. 17.

Referring to FIG. 18, the HDR image acquisition method according to the present embodiment may further include, between process S112a and process S114a, identifying at least one region in at least one image of the plurality of images.

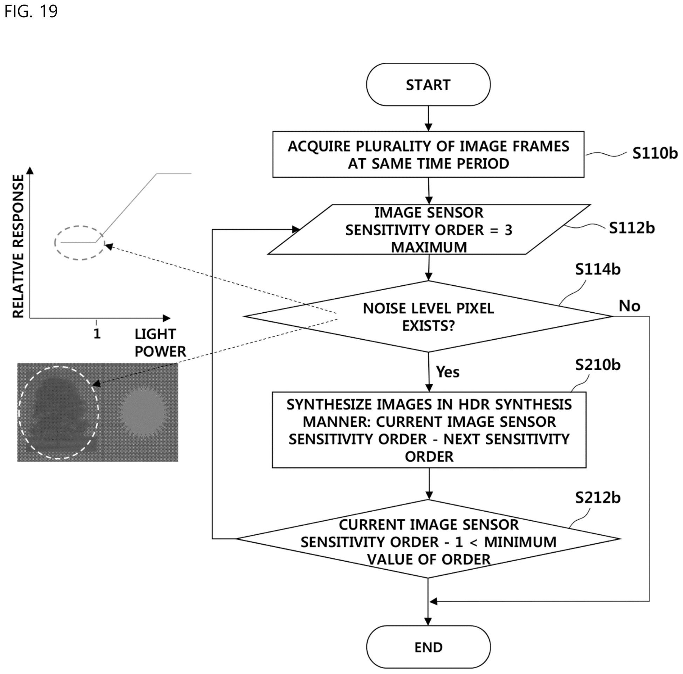

FIG. 19 is a flowchart showing the HDR image acquisition method according to still another embodiment of the present disclosure.

Referring to FIG. 19, the HDR image acquisition method according to the present embodiment may include: acquiring a plurality of images of the same time period (S110b); setting an image sensor sensitivity order (level) (S112b); determining whether a noise level pixel exists in at least one of the plurality of images (S114b); synthesizing the plurality of images in an HDR synthesis manner (S210b); and decreasing the image sensor sensitivity order (level) by one level (S212b). In process S114b, when there is no noise level pixel, all parts within the images may be present in an appropriate range, so that the process may end with the current images. In process S112b, an initial image sensor sensitivity order (level) may be set to the maximum value which is 3 as a non-limiting example. In process S212b, the minimum value of the order may be 1. For the method in FIG. 19, the content previously described in FIG. 15 and FIG. 16 may be referred to.

In addition, a level of the noise level pixel may be set to an arbitrarily designed value. For example, the level of the noise level pixel may be designed to be 2 rather than 1. Even though the noise level pixel actually occurs at 1, an image at the 2 level may be used for HDR blending.

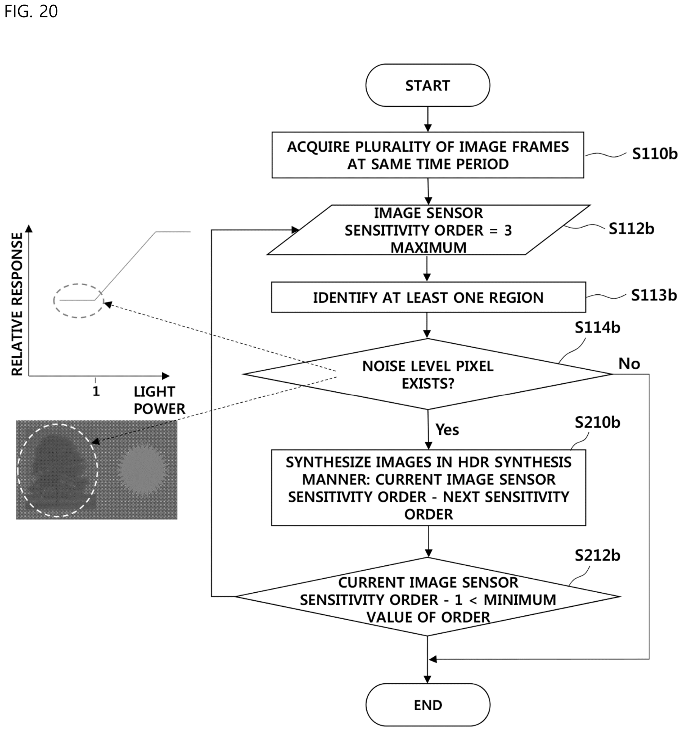

FIG. 20 is a flowchart showing the HDR image acquisition method according to a further embodiment of the present disclosure. FIG. 20 illustrates a modification of the embodiment illustrated in FIG. 19.

Referring to FIG. 20, the HDR image acquisition method according to the present embodiment may further include, between process S112b and process S114b, identifying at least one region in at least one image of the plurality of images (S113b).

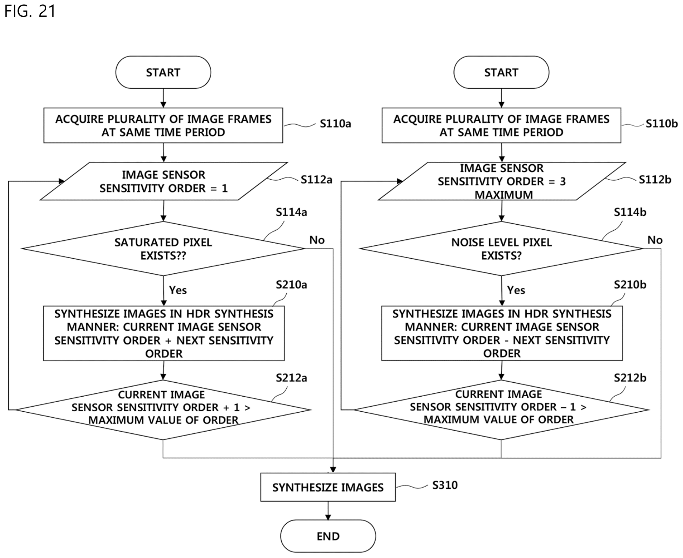

FIG. 21 is a flowchart showing the HDR image acquisition method according to still a further embodiment of the present disclosure.

Referring to FIG. 21, the processes in FIG. 17 and the processes in FIG. 19 may be performed together in parallel. In addition, after process S212a and process S212b, synthesizing the two images (S310) may further be performed. Process S310 may be performed after process S114a and process S114b. The method in FIG. 21 may be easily understood on the basis of the illustrated flowchart and the above-described contents. In process S310, an object may be identified by using Artificial Intelligence (AI).

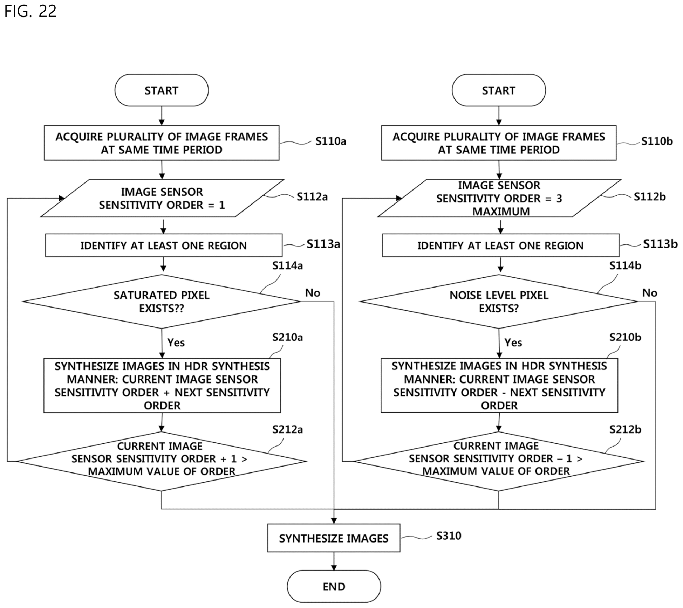

FIG. 22 is a flowchart showing the HDR image acquisition method according to yet a further embodiment of the present disclosure.

Referring to FIG. 22, the processes in FIG. 18 and the processes in FIG. 20 may be performed together in parallel. In addition, after process S212a and process S212b, synthesizing the two images (S310) may further be performed. Process S310 may be performed after process S114a and process S114b. The method in FIG. 22 may be easily understood on the basis of the illustrated flowchart and the above-described contents. In process S310, an object may be identified by using AI.

Although an HDR blending procedure has not been described in detail, the HDR blending procedure may be utilized. That is, as a blending algorithm may be applied, the blending algorithm including: inputting a plurality of images (images having a luminance difference herein, or images having an exposure difference in a general method); aligning the plurality of images (capable of being omitted for images acquired by a plurality of cameras having the same FOV); tone mapping (for enabling representation without quality loss on a general standard display such as an 8-bit monitor); and weighted blending.

According to embodiments of the present disclosure described above, the apparatus and method capable of acquiring an HDR image without a ghost effect such as a ghost artifact may be realized. In addition, according to embodiments of the present disclosure, the apparatus and method capable of providing an HDR image in real time (or almost real time) for a still image as well as a moving image may be realized, the HDR image having a high level of dynamic range. In addition, according to embodiments of the present disclosure, the apparatus and method capable of being usefully applied to the fields of autonomous driving, robotics, extended reality (XR), augmented reality (AR), three-dimensional (3D) cameras, and so on may be realized, and the apparatus and method being capable of preventing errors, malfunctions, and so on in a vision system may also be realized.

According to an embodiment of the present disclosure, since images with the same or similar FOV at the same time period are acquired by using the at least two image acquisition modules (camera modules) with different target sensing light intensity ranges and then the images are blended in the HDR synthesis manner, disadvantages and problems of the conventional HDR methods may be reduced or solved.

First, an embodiment of the present disclosure may be advantageous in expanding a limited HDR. For example, a very wide HDR may be realized according to the attenuation rate of the light attenuator (the fixed-type light attenuator or the electronically controlled light attenuator). When a shutter, an aperture, and so on are used in a conventional manner, an order is increased by about one order. However, in an embodiment of the present disclosure, when HDR blending is performed on a plurality of image frames which has a luminance difference and which is acquired by the plurality of image acquisition modules (camera modules), an HDR of about 240 dB may be realized. As a non-limiting example, in an embodiment of the present disclosure, various combinations of attenuation rates between a camera module photographing an image with a relatively high luminance and a camera module photographing an image with a relatively low luminance may realize attenuation of more than 10,000 times, which may be advantageous for expanding a dynamic range.

Second, an embodiment of the present disclosure may fundamentally eliminate a ghost artifact problem. In an embodiment of the present disclosure, since a plurality of images with the luminance differences at the same time period is capable of being acquired by using the plurality of image acquisition modules (camera modules), a ghost artifact that occurs in a conventional method in which an exposure time is controlled and images acquired at different time periods are used may be prevented.

Third, an embodiment of the present disclosure may have an effect of reducing the time consumption and the power consumption. In an embodiment of the present disclosure, since images with the same or similar FOV are acquired by using the plurality of image acquisition modules (camera modules) and then HDR blending is performed on the images, positions of subjects between the images may be the same or almost the same, and the time consumption and the power consumption required for HDR blending may be reduced.

Fourth, according to an embodiment of the present disclosure, a high-speed HDR imaging operation is capable of being realized, and a high-performance HDR imaging capable of distinguishing and identifying subjects in various light intensity (light power) environments such as day and night may be realized.

In addition, according to an embodiment of the present disclosure, an HDR image is capable of being realized by the simple HDR blending without the need for a separate semiconductor image sensor process development. When the quantum efficiency of the light detector inside the camera is changed, a separate element design and a separate process development may be required.

The HDR image acquisition apparatus and related method according to an embodiment of the present disclosure may be applied to acquire a high-quality 3D image or high-quality 3D moving image in various environments and conditions. For example, the HDR image acquisition apparatus and related method according to an embodiment of the present disclosure may be applied to various fields such as autonomous driving, robotics, extended reality (XR), 3D cameras, aerial photography, and so on. In fields such as autonomic driving and so on where a ghost artifact-free effect is needed, an embodiment of the present disclosure related to a moving image may be applied. However, an embodiment of the present disclosure is not limited to a moving image, but is capable of being applied to a still image.

In this specification, the exemplary embodiments of the present disclosure have been disclosed, and although specific terms have been used, they are only used in a general sense to easily explain the technological content of the present disclosure and to help understanding the present disclosure, and they are not used to limit the scope of the present disclosure. It is obvious to those having ordinary skill in the related art to which the present disclosure belong that other modifications based on the technological idea of the present disclosure may be implemented in addition to the embodiments disclosed herein. It will be understood to those having ordinary skill in the related art that in connection with the apparatus and method for acquiring an HDR image according to the embodiments described with reference to FIG. 1 to FIG. 22, various substitutions, changes, and modifications may be made without departing from the technological spirit of the present disclosure. Therefore, the scope of the present disclosure should not be determined by the described embodiments but should be determined by the technological concepts described in the claims.

**Claims**

1. A High Dynamic Range (HDR) image acquisition apparatus comprising:

   at least two image acquisition modules configured such that each of the at least two image acquisition modules comprises an image sensor and has a target sensing light intensity range different from each other, the at least two image acquisition modules being configured to simultaneously photograph a target photographing region; and
   an HDR-type image synthesis part configured to generate an HDR image by synthesizing at least two images in an HDR synthesis manner, the at least two images being simultaneously acquired by the at least two image acquisition modules.

2. The HDR image acquisition apparatus of claim 1, wherein a difference in field of view (FOV) of the at least two image acquisition modules is equal to or less than 50%.

3. The HDR image acquisition apparatus of claim 1, wherein a light attenuator is provided so as to cause a difference in the target sensing light intensity range between the at least two image acquisition modules.

4. The HDR image acquisition apparatus of claim 3, wherein the at least two image acquisition modules comprises a first image acquisition module and a second image acquisition module, the first image acquisition module does not comprise the light attenuator, and the second image acquisition module comprises the light attenuator.

5. The HDR image acquisition apparatus of claim 3, wherein the light attenuator is disposed on a surface or inside of at least one selected from a casing, a lens part, and the image sensor of the at least two image acquisition modules, or is disposed on a light path either between the casing, the lens part, and the image sensor, or outside the casing, the lens part, and the image sensor.

6. The HDR image acquisition apparatus of claim 3, wherein the light attenuator comprises an electronically controlled light attenuator.

7. The HDR image acquisition apparatus of claim 3, wherein the light attenuator comprises at least one selected from a liquid crystal polarizer and a light absorber.

8. The HDR image acquisition apparatus of claim 1, wherein, in order to cause a difference in the target sensing light intensity range between the at least two image acquisition modules, at least one selected from a structure and a material of the image sensor of each of the at least two image acquisition modules is configured differently.

9. The HDR image acquisition apparatus of claim 1, wherein, in order to cause a difference in the target sensing light intensity range between the at least two image acquisition modules, at least one selected from a structure and a material of the image sensor of each of the at least two image acquisition modules is configured differently while a light attenuator is used together.

10. The HDR image acquisition apparatus of claim 1, wherein an exposure characteristic of the image sensor is capable of being controlled by controlling at least one selected from an aperture, a shutter speed, and a sensitivity (ISO) for at least one of the at least two image acquisition modules.

11. A High Dynamic Range (HDR) image acquisition method comprising:

acquiring at least two images of a same time period by simultaneously photographing a target photographing region by using at least two image acquisition modules configured such that each of the at least two image acquisition modules comprises an image sensor and has a target sensing light intensity range different from each other; and
generating an HDR image by synthesizing the at least two images in an HDR synthesis manner.

12. The HDR image acquisition method of claim 11, further comprising:

after the acquiring of the at least two images, determining whether a luminance-saturated pixel exists in at least one of the at least two images, wherein a luminance-saturated pixel level is capable of being set to an arbitrary designed value, and
wherein, in the determining of whether a luminance-saturated pixel exists, when a luminance-saturated pixel exists, the at least two images are synthesized in the HDR synthesis manner.

13. The HDR image acquisition method of claim 11, further comprising:

after the acquiring of the at least two images, determining whether a noise level pixel or a pixel having an arbitrary level higher than a noise level exists in at least one of the at least two images,
wherein, in the determining of whether a noise level pixel or a pixel having an arbitrary level higher than the noise level exists, when a noise level pixel or a pixel having an arbitrary level higher than the noise level exists, the at least two images are synthesized in the HDR synthesis manner.

14. The HDR image acquisition method of claim 11, wherein, in order to cause a difference in the target sensing light intensity range between the at least two image acquisition modules, at least one selected from a structure and a material of the image sensor of each of the at least two image acquisition modules is configured differently.

15. The HDR image acquisition method of claim 11, wherein, in order to cause a difference in the target sensing light intensity range between the at least two image acquisition modules, at least one selected from a structure and a material of the image sensor of each of the at least two image acquisition modules is configured differently while a light attenuator is used together.

FIG. 1

FIG. 2

EP 4 753 279 A1

FIG. 3

FIG. 4

FIG. 5

FIG. 6

15

16a — — 16b

-10 dB

14a — — 14b

-10 dB

13

-10 dB

12a — 12b

10a    10b

FIG. 7

230

220

210

110

100

FIG. 8

FIG. 9

FIG. 10

FIG. 11

FIG. 12

FIG. 13

FIG. 14

FIG. 15

FIG. 16

SAME TIME PERIOD FRAME: REFERENCED TO HIGHEST SENSITIVITY IMAGE SENSOR. OPPOSITE ALSO POSSIBLE.

TIME

SAME TIME PERIOD FRAME: REFERENCED TO LOWEST SENSITIVITY IMAGE SENSOR. OPPOSITE ALSO POSSIBLE.

IMAGE SENSOR SENSITIVITY

3

2 — FRAME (LIGHT ATTENUATOR)

1 — FRAME (HIGH SENSITIVITY IMAGE SENSOR)

TIME

FIG. 17

START

ACQUIRE PLURALITY OF IMAGE FRAMES
AT SAME TIME PERIOD — S110a

IMAGE SENSOR
SENSITIVITY ORDER = 1 — S112a

S114a

SATURATED PIXEL
EXISTS? — No

Yes — S210a

SYNTHESIZE IMAGES IN HDR SYNTHESIS
MANNER: CURRENT IMAGE SENSOR
SENSITIVITY ORDER + NEXT SENSITIVITY
ORDER

S212a

CURRENT IMAGE
SENSOR SENSITIVITY ORDER + 1 >
MAXIMUM VALUE OF ORDER

END

RELATIVE RESPONSE

1    LIGHT
     POWER

FIG. 18

START

ACQUIRE PLURALITY OF IMAGE FRAMES
AT SAME TIME PERIOD — S110a

IMAGE SENSOR
SENSITIVITY ORDER = 1 — S112a

IDENTIFY AT LEAST ONE REGION — S113a

SATURATED PIXEL
EXISTS? — S114a — No

Yes

SYNTHESIZE IMAGES IN HDR SYNTHESIS
MANNER: CURRENT IMAGE SENSOR
SENSITIVITY ORDER + NEXT SENSITIVITY
ORDER — S210a

CURRENT IMAGE
SENSOR SENSITIVITY ORDER + 1 >
MAXIMUM VALUE OF ORDER — S212a

END

RELATIVE RESPONSE

1 LIGHT
POWER

FIG. 19

START

ACQUIRE PLURALITY OF IMAGE FRAMES AT SAME TIME PERIOD — S110b

IMAGE SENSOR SENSITIVITY ORDER = 3 MAXIMUM — S112b

S114b

NOISE LEVEL PIXEL EXISTS? — No

Yes — S210b

SYNTHESIZE IMAGES IN HDR SYNTHESIS MANNER: CURRENT IMAGE SENSOR SENSITIVITY ORDER - NEXT SENSITIVITY ORDER

S212b

CURRENT IMAGE SENSOR SENSITIVITY ORDER - 1 < MINIMUM VALUE OF ORDER

END

RELATIVE RESPONSE

1  LIGHT POWER

FIG. 20

START

ACQUIRE PLURALITY OF IMAGE FRAMES AT SAME TIME PERIOD — S110b

IMAGE SENSOR SENSITIVITY ORDER = 3 MAXIMUM — S112b

IDENTIFY AT LEAST ONE REGION — S113b

S114b

NOISE LEVEL PIXEL EXISTS? — No

Yes

SYNTHESIZE IMAGES IN HDR SYNTHESIS MANNER: CURRENT IMAGE SENSOR SENSITIVITY ORDER - NEXT SENSITIVITY ORDER — S210b

CURRENT IMAGE SENSOR SENSITIVITY ORDER - 1 < MINIMUM VALUE OF ORDER — S212b

END

RELATIVE RESPONSE

1    LIGHT POWER

FIG. 21

FIG. 22

Europäisches
Patentamt

European
Patent Office

Office européen
des brevets

## EUROPEAN SEARCH REPORT

**Application Number**

EP 25 20 9062

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/208111 A1 (WENDEL ANDREAS [US] ET AL) 4 July 2019 (2019-07-04) | 1-7,10, 11 | INV. H04N23/741 |
| Y | * the whole document * | 8,9, 12-15 | |
| | ----- | | |
| Y | US 2011/284749 A1 (OKADA YOSHIHIRO [JP]) 24 November 2011 (2011-11-24) * paragraph [0018] * | 8,9,14, 15 | |
| | ----- | | |
| Y | US 2017/264831 A1 (HYUGA FUMIHIKO [JP]) 14 September 2017 (2017-09-14) * paragraphs [0061] - [0065]; figure 7 * | 12,13 | |
| | ----- | | |

**TECHNICAL FIELDS SEARCHED (IPC)**

H04N

The present search report has been drawn up for all claims

| Place of search | Date of completion of the search | Examiner |
|---|---|---|
| The Hague | 4 March 2026 | Mao, Pauline |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 9062

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2026

| Patent document cited in search report | | Publication date | Patent family member(s) | | Publication date |
|---|---|---|---|---|---|
| US 2019208111 | A1 | 04-07-2019 | AU | 2018397461 A1 | 30-07-2020 |
| | | | AU | 2021200258 A1 | 18-03-2021 |
| | | | CA | 3087048 A1 | 04-07-2019 |
| | | | CN | 111527743 A | 11-08-2020 |
| | | | EP | 3714596 A1 | 30-09-2020 |
| | | | EP | 4539483 A2 | 16-04-2025 |
| | | | IL | 275606 A | 31-08-2020 |
| | | | JP | 7210589 B2 | 23-01-2023 |
| | | | JP | 2021509238 A | 18-03-2021 |
| | | | KR | 20200091951 A | 31-07-2020 |
| | | | KR | 20220058974 A | 10-05-2022 |
| | | | SG | 11202005851Q A | 29-07-2020 |
| | | | US | 2019208111 A1 | 04-07-2019 |
| | | | US | 2020351434 A1 | 05-11-2020 |
| | | | US | 2022060616 A1 | 24-02-2022 |
| | | | US | 2024223882 A1 | 04-07-2024 |
| | | | US | 2025184595 A1 | 05-06-2025 |
| | | | WO | 2019133177 A1 | 04-07-2019 |
| US 2011284749 | A1 | 24-11-2011 | CN | 102288979 A | 21-12-2011 |
| | | | JP | 2011242261 A | 01-12-2011 |
| | | | US | 2011284749 A1 | 24-11-2011 |
| US 2017264831 | A1 | 14-09-2017 | US | 2017264831 A1 | 14-09-2017 |
| | | | US | 2019335113 A1 | 31-10-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240171715